# EUROPEAN PATENT APPLICATION

(11) **EP 4 592 512 A1**
(43) Date of publication of application: **30.07.2025**
(21) Application number: 25153089.5
(22) Date of filing: 21.01.2025
(51) Int. Cl.: F02C 7/232, F02C 7/236, F02C 9/30

(54) **AIRCRAFT FUEL SYSTEM WITH DUAL USE ELECTRIC PUMP**

(30) Priority: 23.01.2024 US 202418419954
(71) Applicant: Hamilton Sundstrand Corporation, Charlotte, NC 28217-4578 (US)
(72) Inventor: MASTROCOLA, Naison E., Goshen, 06756 (US); SUSCA, Ryan Prescott, Windsor, 06095 (US)
(74) Representative: Dehns

(57) **Abstract**

A fuel pumping system for delivering fuel to an engine component includes a boost pump (30) having a boost pump outlet (34) and a main pump (32) having a main pump inlet (36) and a main pump outlet (50). The main pump inlet is fluidly connected to the boost pump outlet via a main pump feed conduit (38). A fuel control conduit (62) is fluidly connected to the main pump outlet and to the engine component. A third pump (56) has a third pump inlet (58) and a third pump outlet (62). The third pump outlet is fluidly connected to the engine component (52). A third pump conduit is fluidly connected to the main pump outlet and to the third pump inlet. A valve (V1) is operable to control a fuel flow to the third pump in response to a pressurization demand of the engine component.

## Description

### BACKGROUND

Exemplary embodiments relate to aircraft systems, and more particularly, to a fuel pumping system suitable for use on an aircraft.

Traditional engine fuel pumps are sized for start and windmill conditions, resulting in pumps that are larger than needed for most operations of the aircraft. As a result, during operation of the engine in a normal, non-extreme condition fuel recirculation occurs and adds waste heat to the fuel. It is desirable to achieve an engine fuel pumping system that adds minimal mechanical energy to the fuel as it flows through the fuel pumping system while increasing the pressure of the fuel to meet the downstream requirements.

### BRIEF DESCRIPTION

According to one aspect of the invention, a fuel pumping system for delivering fuel to an engine component includes a boost pump having a boost pump outlet and a main pump having a main pump inlet and a main pump outlet. The main pump inlet is fluidly connected to the boost pump outlet via a main pump feed conduit. A fuel control conduit is fluidly connected to the main pump outlet and to the engine component. A third pump has a third pump inlet and a third pump outlet. The third pump outlet is fluidly connected to the engine component. A third pump conduit is fluidly connected to the main pump outlet and to the third pump inlet. A valve is operable to control a fuel flow to the third pump in response to a pressurization demand of the engine component.

In embodiments at least one of the boost pump and the main pump are operably coupled to and driven by a first source and the third pump is operably coupled to and driven by a second source, different from the first source.

In embodiments the first source is an engine and the second source is an electric motor.

In embodiments the second source is a variable speed motor.

In embodiments the valve is transformable between a first position and a second position. In the first position, at least some of the fuel flow from the main pump outlet is provided to the third pump and in the second position, at least some of the fuel flow from the main pump outlet is provided directly to the engine component.

In embodiments in the first position, all of the fuel flow from the main pump outlet is provided to the third pump and in the second position, all of the fuel flow from the main pump outlet is provided directly to the engine component.

In embodiments the third pump conduit is connected to the fuel control conduit at a location downstream from the main pump outlet and upstream from the engine component.

In embodiments the valve is arranged at an interface between the third pump conduit and the fuel control conduit.

In embodiments the valve is transformable between the first position and the second position via a solenoid.

In embodiments including a check valve arranged downstream from the third pump outlet and upstream from the engine component.

In embodiments an aircraft includes the fuel pumping system.

According to another aspect of the invention, a method of operating a fuel pumping system operable to deliver a fuel flow to an engine component includes identifying a pressurization at the engine component required to meet a commanded thrust, comparing the pressurization at the engine component required to meet the commanded thrust with a pressurization of the fuel flow output from a main pump, and transforming a valve between a first position and a second position to selectively fluidly couple a third pump to an outlet of the main pump in response to comparing the pressurization at the engine component required to meet the commanded thrust with the pressurization of the fuel flow output from the main pump.

In embodiments the valve is transformed to the first position when the pressurization of the fuel flow output from the main pump is less than the pressurization at the engine component required to meet the commanded thrust.

In embodiments the valve is in the first position during a start-up condition.

In embodiments the valve is in the first position during a take-off condition.

In embodiments the valve is transformed to the second position when the pressurization of the fuel flow output from the main pump is equal to or greater than the pressurization at the engine component required to meet the commanded thrust.

In embodiments the valve is in to the second position during a sub-idle condition.

In embodiments the valve is in to the second position during a cruise condition.

In embodiments including adjusting an engine control device, the identifying the pressurization at the engine component required to meet the commanded thrust occurring in response to the adjusting the engine control device.

### BRIEF DESCRIPTION OF THE DRAWINGS

The following descriptions should not be considered limiting in any way. With reference to the accompanying drawings, like elements are numbered alike:
FIG. 1 is a schematic diagram of a fuel pumping system in a first mode of operation according to an embodiment; and
FIG. 2 is a schematic diagram of a fuel pumping system in a second mode of operation according to an embodiment.

### DETAILED DESCRIPTION

A detailed description of one or more embodiments of the disclosed apparatus and method are presented herein by way of exemplification and not limitation with reference to the Figures.

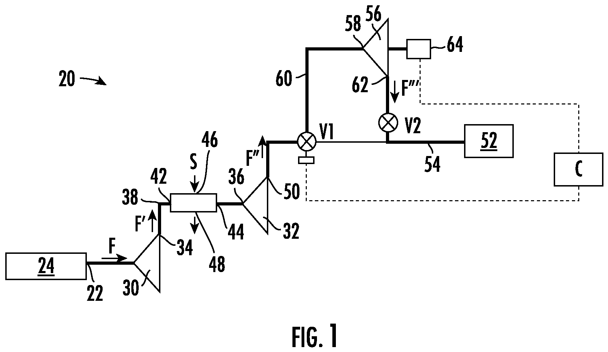

With reference now to the FIG. 1, an example of an engine fuel pumping system 20, such as associated with a gas turbine engine for example, is illustrated. An inlet 22 of the fuel pumping system 20 is fluidly connected to a fuel system of the aircraft. For example, the inlet 22 may be connected and configured to receive a flow of fuel from a fuel reservoir or tank 24 of the fuel system, such as located within a wing of an aircraft. Although not shown, the fuel F may be heated, such as via a heat exchanger, at a location upstream from the inlet 22 of the fuel pumping system 20.

As shown, the fuel pumping system 20 includes a plurality of pumps. A first pump 30 of the plurality of pumps may be a boost pump and a second pump 32 of the plurality of pumps may be a main pump. At least one of the first pump 30 and the second pump 32 is driven by a first source, such as the engine. In an embodiment, both the first pump 30 and the second pump 32 are mechanically coupled to the engine. Although the first pump 30 and the second pump 32 may have any suitable configuration, in an embodiment, the first pump 30 is a centrifugal pump and the second pump 32 is a positive displacement pump.

In an embodiment, an outlet 34 of the first pump 30, also referred to herein as a boost pump outlet, may be fluidly connected to an inlet 36 of the second pump 32, such as via a main pump feed conduit 38. Accordingly, the second pump 32 may be arranged in series with and downstream from the first pump 30 relative to a flow of fuel F moving through the fuel pumping system 20. The first pump 30 is operable to increase the pressure of the fuel F provided thereto from a first pressure to a greater, second pressure. Fuel at the second pressure is represented by F.' The second pressure may be equal to or greater than a minimum pressure required to move the fuel to the second pump 32. The second pump 32 is operable to further increase the pressure of the fuel F' provided thereto from a second pressure to a third pressure. Fuel at the third pressure is represented by F."

In an embodiment, a heat exchanger 40 is arranged between the first pump 30 and the second pump 32. For example, a first inlet 42 of the heat exchanger 40 is fluidly coupled to the boost pump outlet 34 and the first outlet 44 of the heat exchanger 40 is fluidly connected to the main pump inlet 36. A secondary flow S is provided to a second inlet 46 of the heat exchanger 40 and is output from the heat exchanger 40 via a second outlet 48. The fuel F' may be configured to absorb heat from the secondary flow S within the heat exchanger 40. However, embodiments where the fuel F' is cooled within the heat exchanger 40 by the secondary flow S are also contemplated herein.

The outlet 50 of the second pump 32 may be fluidly connected to an engine component 52, such as a fuel metering unit or fuel control for example, via a fuel control conduit 54. In an embodiment, within the fuel control 52, the fuel is metered and utilized for combustion by directing the fuel into fuel injector nozzles and spraying the fuel into the engine for combination by the combustion burners.

In the illustrated, non-limiting embodiment, the fuel pumping system 20 additionally includes a third pump 56. An inlet 58 of the third pump 56 may be fluidly connected to the fuel control conduit 54 at a location downstream from the main pump outlet 50 and upstream from the engine component 52 via a third pump conduit 60. In such embodiments, the third pump outlet 62 is fluidly connected to the fuel control conduit 54 at a location upstream from the engine component 52 and downstream from the interface between the fuel control conduit 54 and the third pump conduit 60. The third pump 56 is driven by a second source, separate from the first source associated with the first and/or second pumps 30, 32. In an embodiment, the third pump 56 is driven by an electric motor 64. In some embodiments, the electric motor 64 is a variable speed motor, and as a result, the speed of rotation of the third pump 56 may be variable. The third pump 56 is operable to further increase the pressure of the fuel F" provided thereto from a third pressure to a fourth pressure. Fuel at the fourth pressure is represented by F‴.

As shown, a valve V1 may be arranged within the fuel control conduit 54 and is operable to control the flow from the second pump 32 provided to the engine component 52 and to the third pump 56. In the illustrated, non-limiting embodiment, the valve V1 is arranged at the interface between the fuel control conduit 54 and the third pump conduit 60. However, embodiments where the valve V1 is located at another suitable location are also contemplated herein. The valve V1 may be transformable between a plurality of positions including a first position, in which the entirety of the flow output from the second pump 32 is directed towards the third pump 56, and a second position in which the entirety of the flow output from the second pump 32 is directed towards the engine component 52. In an embodiment, the valve V1 cannot be arranged at an intermediate position between the first position and the second position. However, embodiments where the valve V1 can be arranged at an intermediate position between the first position and the second position are contemplated herein. The valve V1 may be any suitable type of valve and may be transformed between the plurality of positions by any suitable device, such as a solenoid for example. A check valve V2 may be located directly downstream from the third pump outlet 62 to prevent flow from the fuel control conduit 54 towards the third pump 56.

The fuel pumping system 20 is operable in a plurality of different modes, for example based on the position of the valve V1. With continued reference to FIG. 1, operation of the fuel pumping system 20 in a first mode is illustrated. As described, fuel F from a fuel tank 24 is provided to the first, boost pump 30, which increases the pressure of the fuel to a second pressure F'. As previously noted, the increase in the pressure of the fuel at the boost pump 30 may be just sufficient to move the fuel F' to the second pump 32. The fuel having the second pressure F" may then be conditioned, for example heated within the heat exchanger 40, and in some embodiments may be filtered before being provided to the main pump inlet 36. Within the second pump 32, the fuel is further pressurized, resulting in a fuel having a third pressure F". During operation in the first mode, the valve V1 is in the first position and the third pump 56 is path of the fuel flow path of the fuel pumping system 20. Accordingly, the fuel F" output from the second pump 32 is provided to the third pump 56 to be further pressurized to form a fuel having a fourth pressure F'". In an embodiment, the pressure of the fuel F'" output from the third pump 56 is sufficient to meet the demands required by the engine component 52. The fuel F'" output from the third pump 56 may then be provided directly to the engine component 52.

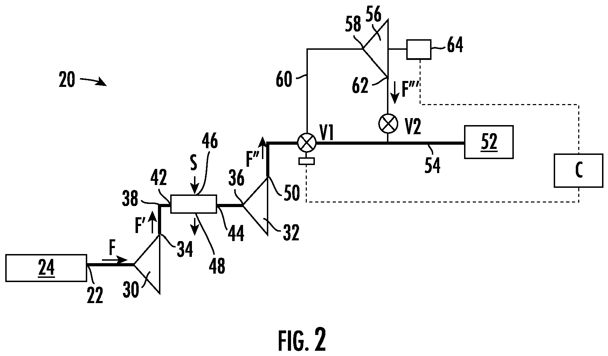

With reference now to FIG. 2, in a second mode of operation, fuel F from a fuel tank 24 is similarly provided to the boost pump 30, which increases the pressure of the fuel to a second pressure F'. The fuel having the second pressure F" may then be conditioned, for example heated within the heat exchanger 40, and in some embodiments may be filtered before being provided to the main pump inlet 36. Within the second pump 32, the fuel is further pressurized, resulting in a fuel having a third pressure F". During operation in the second mode, the valve V1 is in the second position. Accordingly, the fuel F" output from the main pump outlet 50 is provided directly to the engine component 52. In such embodiments, the fuel output from the main pump 32 and having the third pressure F" is sufficient to meet the demands of the engine component 52. Accordingly, when the valve V1 is in the second position, all of the fuel is configured to flow from the main pump outlet 50 directly to the engine component 52. When the valve V1 is in the second position, in some embodiments, none of the fuel from the main pump outlet 50 is provided to the third pump inlet 58.

A controller, illustrated at C, such as including a microprocessor for example, may be operably coupled to the electric motor 64 and to the valve V1. For example, the controller C may be operable to transform the valve V1 between the first position and the second position, and/or may be able to communicate one or more operational commands to the electric motor 64. In an embodiment, the controller C is additionally be configured to receive signals, either directly or indirectly, generated by operation of an engine control device, such as a throttle for example. As an operator adjusts the position of the throttle, the thrust of the engine will either increase or decrease. As the thrust changes, the engine speed and the requirements of the fuel flow associated therewith will also change. Accordingly, the controller C may be configured to adjust operation of an engine in response to the commanded thrust of the engine. The controller may be operable to identify the pressurization requirement of the fuel flow associated with the commanded thrust, in response to the operating adjusting the position of the engine control device. Upon determining the pressurization requirement of the fuel flow, the controller may further compare the pressurization requirement of the fuel flow with the pressurization of the fuel flow output from the main pump 32.

If the pressurization of the fuel flow output from the main pump 32 is less than the pressurization requirement of the fuel flow, the valve V1 is transformed to the first position for operation of the fuel pumping system 20 in a first mode. In the first mode, further pressurization of the fuel occurs within the third pump 56 prior to delivery of the fuel to the engine component 52. In an embodiment, the fuel pumping system 20 is operable in the first mode of operation in which the fuel is further pressurized by a third pump 56 to the further pressure F'" to meet the pressure demands of the engine component 52 during a start-up condition of the engine and as the engine transitions from the start-up condition to a sub-idle condition. During a start-up condition or as the engine transitions from the start-up condition to the sub-idle condition, the commanded thrust of the engine may be associated with a corresponding rotor shaft speed, such as between be between 8-12% of the maximum rotor shaft speed. In the sub-idle condition, the fuel pumping system 20 is associated with a rotor shaft speed between about 12% and about 60% of the maximum rotor shaft speed. An idle condition may be associated with a rotor shaft speed between about 60% and 70% of the maximum rotor shaft speed. A cruise condition may be associated with a rotor shaft speed between 70-80% of the maximum rotor shaft speed, a climb condition may be associated with a rotor shaft speed between 80-90% of the maximum rotor shaft speed, and a take-off or maximum power condition may be associated with a rotor shaft speed between about 90 and 100% of the maximum rotor shaft speed.

However, if the pressurization of the fuel flow output from the main pump 32 is equal to or exceeds the pressurization requirement of the fuel flow, the valve V1 is transformed to the second position for operation in the second mode. In the second mode, the third pump 56 may be fluidly disconnected from the fuel flow path and therefore is not used to pressurize the fuel provided to the engine component 52. In an embodiment, the fuel pumping system 20 is operable in the second mode of operation in which the fuel is provided directly from the main pump outlet 50 to the engine component 52 during a sub-idle condition. During a sub-idle condition, the commanded thrust, and therefore the commanded rotor shaft speed of the engine may be between about 12% and about 60% of the maximum rotor shaft speed. In an embodiment, the fuel pumping system 20 is operable in the second mode of operation during a climb or cruise condition.

By selectively connecting the third pump 56 to the flow path of the fuel pumping system 20 when additional pressurization of the fuel is needed, the second or main pump 32 can be sized for a cruise condition instead of for the start and windmill conditions. Further, because the third pump is driven via a source remote from the engine, such as via an electric motor, a significantly greater pressurization of the fuel can be achieved therein while maintaining a small pump size.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention, the scope of which is defined by the claims.

## Claims

1. A fuel pumping system for delivering fuel to an engine component, the fuel pumping system comprising:
a boost pump (30) having a boost pump outlet (34);
a main pump (32) having a main pump inlet (36) and a main pump outlet (50), the main pump inlet being fluidly connected to the boost pump outlet via a main pump feed conduit (38);
a fuel control conduit (54) fluidly connected to the main pump outlet and to the engine component (52);
a third pump (56) having a third pump inlet (58) and a third pump outlet (62), the third pump outlet being fluidly connected to the engine component;
a third pump conduit (60) fluidly connected to the main pump outlet and to the third pump inlet; and
a valve (V1) operable to control a fuel flow to the third pump in response to a pressurization demand of the engine component.

2. The fuel pumping system of claim 1, wherein at least one of the boost pump (30) and the main pump (32) are operably coupled to and driven by a first source and the third pump is operably coupled to and driven by a second source, different from the first source.

3. The fuel pumping system of claim 2, wherein the first source is an engine and the second source is an electric motor, or wherein the second source is a variable speed motor.

4. The fuel pumping system of any preceding claim, wherein the valve is transformable between a first position and a second position, wherein in the first position at least some of the fuel flow from the main pump outlet is provided to the third pump and in the second position at least some of the fuel flow from the main pump outlet is provided directly to the engine component, and optionally wherein the valve is transformable between the first position and the second position via a solenoid.

5. The fuel pumping system of claim 4, wherein in the first position, all of the fuel flow from the main pump outlet is provided to the third pump and in the second position, all of the fuel flow from the main pump outlet is provided directly to the engine component.

6. The fuel pumping system of claim 4 or 5, wherein the third pump conduit is connected to the fuel control conduit at a location downstream from the main pump outlet and upstream from the engine component.

7. The fuel pumping system of claim 6, wherein the valve (V1) is arranged at an interface between the third pump conduit and the fuel control conduit.

8. The fuel pumping system of any preceding claim, further comprising a check valve (V2) arranged downstream from the third pump outlet (62) and upstream from the engine component (52).

9. An aircraft including the fuel pumping system of any preceding claim.

10. A method of operating a fuel pumping system operable to deliver a fuel flow to an engine component (52), the method comprising:
identifying a pressurization at the engine component required to meet a commanded thrust;
comparing the pressurization at the engine component required to meet the commanded thrust with a pressurization of the fuel flow output from a main pump (32); and
transforming a valve (V1) between a first position and a second position to selectively fluidly couple a third pump (56) to an outlet (50) of the main pump in response to comparing the pressurization at the engine component required to meet the commanded thrust with the pressurization of the fuel flow output from the main pump.

11. The method of claim 10, wherein the valve is transformed to the first position when the pressurization of the fuel flow output from the main pump is less than the pressurization at the engine component required to meet the commanded thrust.

12. The method of claim 10 or 11, wherein the valve is in the first position during a start-up condition, or wherein the valve is in the first position during a take-off condition.

13. The method of claim 10, 11 or 12, wherein the valve is transformed to the second position when the pressurization of the fuel flow output from the main pump is equal to or greater than the pressurization at the engine component required to meet the commanded thrust.

14. The method of any of claims 10 to 13, wherein the valve is in to the second position during a sub-idle condition, or wherein the valve is in to the second position during a cruise condition.

15. The method of any of claims 10 to 14, further comprising adjusting an engine control device, the identifying the pressurization at the engine component required to meet the commanded thrust occurring in response to the adjusting the engine control device.
